# FASCICULE DE BREVET EUROPEEN

(11) **EP 0 358 142 B1**
(45) Date de publication et mention de la délivrance du brevet: **01.12.1993**
(21) Numéro de dépôt: 89116275.2
(22) Date de dépôt: 04.09.1989
(51) Int. Cl.: G02F 1/1333, B60R 1/08, B60K 37/02

(54) **Cellule à cristal liquide munie de pièges à bulles**
Flüssigkristallzelle, versehen mit Blasenfallen
Liquid crystal cell with bubble traps

(30) Priorité: 07.09.1988 CH 3359/88; 12.09.1988 FR 8811951
(43) Date de publication de la demande: 14.03.1990
(73) Titulaire: ASULAB S.A., CH-2502 Bienne (CH)
(72) Inventeur: Grupp, Joachim, CH-2034 Peseux (CH)
(74) Mandataire: Caron, Gérard

(56) Documents cités:
- FR-A- 2 191 135
- PATENT ABSTRACTS OF JAPAN, vol. 10, no. 190 (P-474)[2246], 4 juillet 1986; & JP-A-61 035 431
- PATENT ABSTRACTS OF JAPAN, vol. 3, no. 131 (E-148), 31 octobre 1979; & JP-A-54 107 751
- PATENT ABSTRACTS OF JAPAN, vol. 12, no. 238 (P-726)[3085], 7 juillet 1988; & JP-A-63 029 730

## Description

L'invention concerne une cellule à cristal liquide munie de pièges à bulles, destinés à éviter la formation de bulles dans la surface active de la cellule lors de variations importantes du volume de cristal liquide, dues par exemple à des variations de température, notamment pour des cellules à cristal liquide du type nématique à torsion élevée désignées couramment en anglais par STN (super twisted nematic), dichroïques, ferroélectriques ou analogues.

Les cellules à cristal liquide sont généralement constituées d'un film de cristal liquide intercalé entre deux lames de verre recouvertes chacune sur leur face en regard d'électrodes. Ces lames sont réunies entre elles par un cadre de scellement s'étendant le long du pourtour de ces dernières. Le cadre de scellement définit, d'une part, une chambre étanche dans laquelle le film de cristal liquide est emprisonné et, d'autre part, un écartement (de l'ordre de 5 à 9 µm) ainsi qu'un isolement électrique convenable entre les deux lames.

De telles cellules présentent plusieurs problèmes tant à la fabrication qu'à l'utilisation.

Un premier problème réside dans le remplissage de la cellule par le cristal liquide. Le remplissage doit être réalisé de sorte que toutes les pollutions, poussières, bulles, etc., soient évitées.

Classiquement, on effectue le remplissage de la cellule par trempage de celle-ci dans le cristal liquide, la cellule ayant été préalablement mise sous un vide poussé, du côté d'une ouverture ménagée dans le cadre de scellement. Malheureusement, on s'aperçoit que cette technique de remplissage entraîne la formation de bulles de gaz constituant un défaut visible dans la cellule, notamment pour des cellules de grandes dimensions. En outre, il existe des mélanges de cristal liquide comprenant des composants volatiles qui s'évaporent lorsqu'ils sont soumis à des pressions très basses, ce qui modifie la composition du cristal liquide. Avec de tels mélanges, il n'est donc pas possible d'utiliser de telles pressions pour le remplissage. Il en résulte la formation de bulles de gaz.

Pour remédier à cet inconvénient, on connaît du document JP 61-35431 une cellule d'affichage à cristal liquide de forme générale rectangulaire comprenant un cadre intérieur supplémentaire définissant avec le cadre de scellement une chambre secondaire, en plus de la chambre principale qui définit la surface active de la cellule. Ces deux chambres communiquent par une unique ouverture de passage disposée à l'opposé de l'ouverture de remplissage. La chambre secondaire définit une surface passive et est destinée à piéger les bulles de gaz apparaissant lors du remplissage afin de les éliminer de la surface active.

Cependant, cette solution n'est pas satisfaisante. En effet, lorsque le cristal liquide est introduit dans la cellule par l'ouverture de remplissage, ce dernier présente, en raison des lois d'écoulement, un profil de remplissage convexe si bien que, à l'instant où le cristal liquide atteint l'ouverture de passage, il subsiste dans chaque coin de la chambre principale disposé de part et d'autre de l'ouverture susdite un résidu de gaz qui produit un défaut visible à la surface de la cellule et qui peut facilement se déplacer dans la chambre principale. En outre, le temps de remplissage de telles cellules est très élevé du fait de la longueur du chemin que le cristal liquide doit parcourir pour remplir la chambre secondaire, ce qui présente un inconvénient non négligeable dans le cadre d'une production de masse de ce type de cellule.

Le second problème se situe au niveau du cadre de scellement de la cellule. Le cadre de scellement définissant l'écartement entre les deux lames doit avoir une épaisseur constante pour maintenir un parallélisme correct entre les deux lames afin d'obtenir une surface active sans défaut.

On notera à ce propos qu'une variation d'écartement des lames de 0,1 µm environ engendre un défaut visible à l'oeil nu à la surface de la cellule.

Pour pallier ce problème, on utilise généralement, notamment pour des cellules de grandes dimensions, des entretoises en forme de billes ou de fibres de diamètre déterminé, ces dernières étant mis en place avant l'assemblage des deux lames. Néanmoins, si l'on désire utiliser la cellule dans une large gamme de températures (-40°C, +85°C), le coefficient de dilatation du cristal liquide étant plus grand que celui des lames de la cellule, la cellule se bombe ou se contracte, ce qui entraîne respectivement une variation d'écartement ou la formation de bulles.

Une solution immédiate consisterait à jouer sur le nombre d'entretoises par unité de surface, afin de permettre au volume de la cellule de s'adapter sensiblement à la variation de volume du cristal et ainsi diminuer sinon éviter la formation de bulles; toutefois, si la cellule est soumise à des vibrations ou des pressions extérieures, il en résulte des variations de l'écartement entre les deux lames préjudiciables à la qualité d'affichage de la cellule.

Une cellule décrite dans le document JP 62-257129 tente d'apporter un début de solution aux problèmes évoqués plus haut.

Cette solution consiste en une cellule à cristal liquide munie de deux obstacles voisins disposés immédiatement en avant de l'ouverture de remplissage et formant un espace communiquant avec la chambre principale de la cellule. Une bulle de gaz est emprisonnée volontairement au remplissage de la cellule, cette bulle ayant un volume susceptible de varier afin de compenser les variations de volume du cristal contenu dans la cellule, quand elle est soumise à des températures très basses. Cependant, le piégeage de la bulle n'est pas totalement garanti, et il est très probable que lors d'une importante variation de son volume, la bulle quitte l'espace et circule dans la chambre principale de la cellule. La bulle ne peut alors plus être contrôlée.

Enfin, le document JP-54-107752 décrit une cellule à cristal liquide munie d'un piège à bulles constitué par un cadre intérieur rectangulaire supplémentaire qui définit avec le cadre de scellement une chambre secondaire, la chambre principale définissant la surface active de la cellule. Ces deux chambres communiquent entres elles par deux ouvertures disposées dans deux coins diamétralement opposés du cadre intérieur.

La cellule décrite dans ce document ne comprend pas d'orifice de remplissage et est remplie en déposant un volume déterminé de cristal liquide sous la forme d'une goutte sur une lame après quoi l'autre lame est rapportée et scellée sur la première.

Là encore, ce procédé de remplissage engendre la formation de bulles dans les deux coins opposés du cadre intérieur ne comprenant pas d'ouvertures d'accès à la chambre secondaire.

D'autre part, les bulles éventuellement piégées dans la chambre secondaire y circulent librement si bien que le risque que les bulles quittent cette chambre lors d'importantes variations de volume du cristal est grand.

L'invention a donc pour but principal de remédier aux inconvénients de l'art antérieur susmentionné en fournissant une cellule à cristal liquide dont la qualité optique est constante dans une large gamme de températures et de pressions extérieures, et qui, entre autres, peut être facilement utilisée dans des structures soumises à d'importantes vibrations. Un exemple d'une telle structure peut être un rétroviseur de véhicule automobile.

A cet effet, la présente invention a pour objet une cellule à cristal liquide comprenant au moins une lame avant transparente, une lame arrière, et un cadre de scellement interposé entre les deux lames, l'ensemble ainsi formé définissant un volume étanche dans lequel est emprisonné un film de cristal liquide dont une caractéristique optique est susceptible d'être modifiée quand il est soumis à des phénomènes déterminés, ledit volume étant divisé par au moins une paroi de séparation en une chambre principale définissant une surface active et une chambre secondaire définissant une surface passive s'étendant sur la totalité d'un pourtour de la cellule, ladite chambre secondaire étant partiellement remplie par le cristal liquide et par un gaz, la chambre principale communiquant par une pluralité d'ouvertures de passage pour le cristal liquide, pratiqués dans ladite paroi de séparation.

Conformément à l'invention, la chambre secondaire est divisée en une pluralité de compartiments, chacun d'eux étant en communication avec la chambre principale par l'intermédiaire d'au moins une desdites ouvertures.

Ainsi, grâce à cette pluralité de compartiments reliés chacun à la chambre principale par au moins une ouverture de passage, les bulles sont définitivement piégées dans le fond des compartiments si bien qu'une circulation aléatoire de celles-ci dans la chambre secondaire est fortement réduite et que le risque du passage des bulles piégées dans la chambre secondaire à la chambre principale est pratiquement éliminé.

Par ailleurs, les longueurs des chemins d'accès du cristal liquide contenu dans la chambre principale à la chambre secondaire sont considérablement diminuées si bien que la circulation du cristal liquide est facilitée. On évite ainsi efficacement la formation de bulles dans la chambre principale tant lors du remplissage de la cellule que lors d'une variation de volume du cristal liquide. Ceci est particulièrement intéressant pour l'application d'une telle cellule - à laquelle on ajouterait les éléments supplémentaires nécessaires (électrodes, miroirs, etc.) - à un rétroviseur pour un véhicule automobile.

Selon un mode avantageux de réalisation de l'invention, les compartiments ont chacun un volume sensiblement égal.

D'autres caractéristiques et avantages de l'invention apparaîtront à la lecture de la description qui suit de modes de réalisation non limitatifs en liaison avec les dessins ci-joints parmi lesquels :
- Les figures 1 et 2 montrent chacune une vue schématique de dessus d'une cellule à cristal liquide selon l'invention appliquée à un rétroviseur à coefficient ajustable de réflexion de la lumière, pour un véhicule automobile;
- La figure 3 montre une vue schématique en coupe d'une cellule à cristal liquide selon la ligne III - III de la figure 1; et
- Les figures 4 et 5 montrent chacune une vue schématique de dessus d'une cellule à cristal liquide selon l'invention appliquée à un affichage matriciel pour un tableau de bord d'un véhicule automobile.

La description détaillée d'une cellule à cristal liquide selon l'invention qui va suivre va être faite dans le cadre d'une application à un rétroviseur pour véhicule automobile et d'un indicateur pour un tableau de bord pour véhicule automobile.

Bien entendu, l'invention n'est pas limitée aux applications et aux modes de réalisation qui seront décrits ou envisagés. Par exemple, les cellules selon l'invention peuvent être utilisées de manière classique comme afficheur ou encore sans électrodes avec un cristal liquide de type cholestérique comme thermomètre.

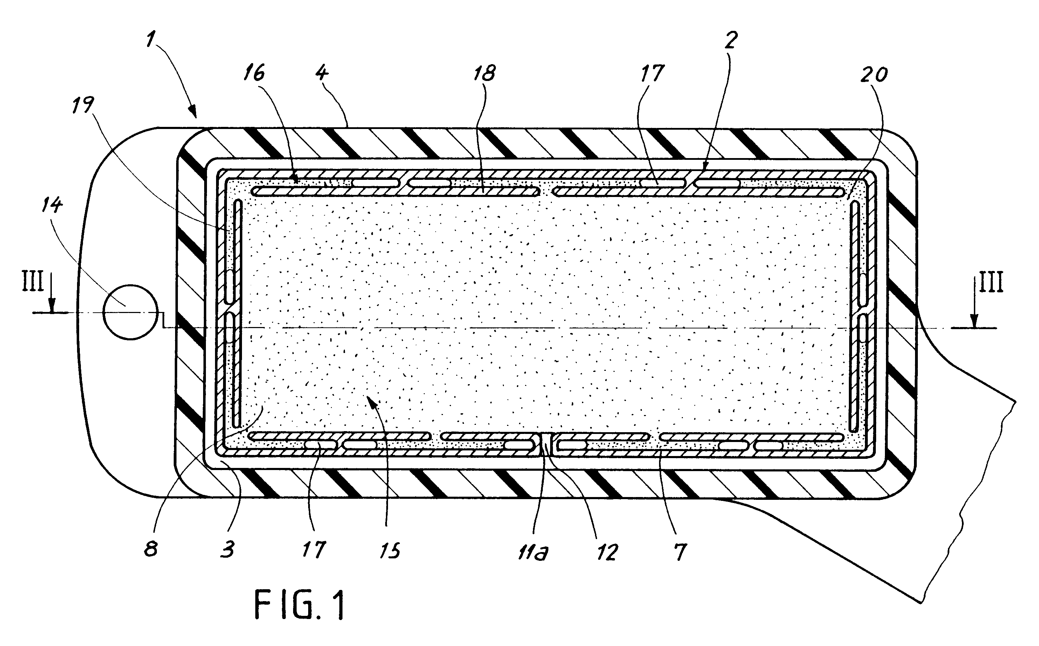

En se référant aux figures 1 à 3, on voit un rétroviseur pour véhicule automobile désigné par la référence générale 1 comprenant une cellule à cristal liquide 2 selon l'invention. A titre d'exemple, la cellule est de forme générale rectangulaire.

La cellule 2 est montée dans un cadre 3, ce dernier étant fixé par collage dans le boîtier 4 du rétroviseur 1.

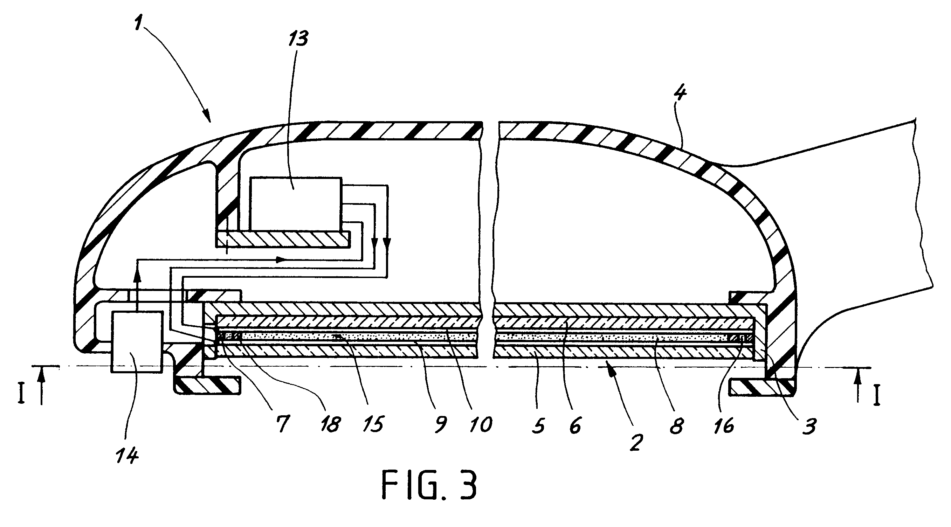

Comme il ressort particulièrement de la figure 3, la cellule 2 comprend, de manière connue, une lame avant 5 transparente ayant subi un traitement anti-reflet et une lame arrière 6 réunies entre elles par un cadre de scellement 7 définissant un volume étanche dans lequel est emprisonné un mélange 8 composé d'un cristal liquide nématique et d'un colorant dichroïque.

La lame avant 5 porte sur sa face interne une électrode 9 transparente s'étendant sur la totalité de la lame, par exemple un mélange d'oxyde d'indium/étain, ainsi qu'une couche d'alignement (non représentée).

Par ailleurs, la lame arrière 6 porte sur la totalité de sa face interne une contre-électrode 10 et une couche réfléchissante pouvant constituer l'électrode, et une couche d'alignement (non représentée).

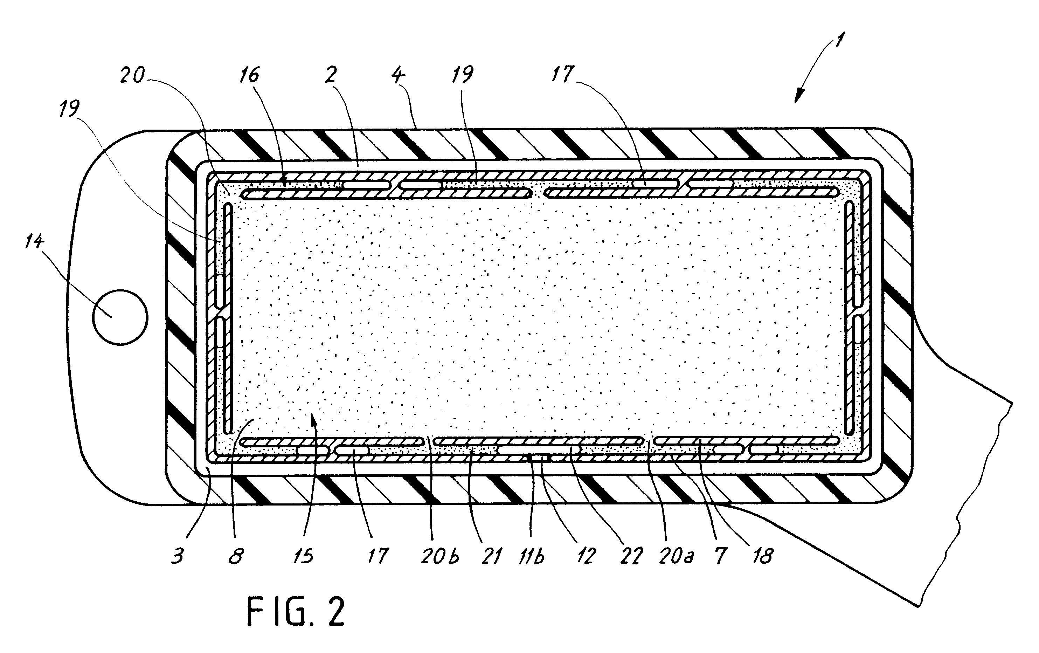

Enfin, la cellule comprend une ouverture de remplissage 11a bouchée par un joint de colle 12 (fig. 2) après introduction du cristal liquide dans la cellule. Un boîtier de commande électrique 13 alimenté par exemple par une pile comprend une entrée reliée à un capteur photo-sensible 14, ce boîtier délivrant un signal de commande représentatif de l'intensité de la lumière reçue par le capteur vers deux sorties reliées respectivement à l'électrode 9 et la contre-électrode 10 afin de commander le degré d'absorption de la cellule 2.

Il est à noter que le dessin ne reflète pas l'épaisseur exacte de l'ensemble ainsi formé, cette épaisseur étant fortement exagérée pour plus de clarté. Pour fixer les idées, la distance entre les deux éléctrodes peut être de 5 à 9 µm.

Selon l'invention, ledit volume étanche est divisé en une chambre principale 15 remplie totalement par le cristal liquide et une chambre secondaire 16 partiellement remplie par le cristal liquide et par un gaz sous forme de bulles 17, par exemple de l'azote. La chambre principale 15 définit une surface active de la cellule, c'est-à-dire la surface présentée à la vue de l'utilisateur, laquelle doit être totalement exempte de défaut visible tel que bulles, variation de couleur, etc. tandis que la chambre secondaire définit une surface passive qui n'est normalement pas visible quand la cellule est montée sur un support.

La chambre secondaire 16 est définie, d'une part, par le cadre de scellement 7 et, d'autre part, par une paroi de séparation formant un cadre intérieur 18 s'étendant le long du pourtour du cadre de scellement 7 à une faible distance de ce dernier. Cette chambre secondaire forme un canal dont la largeur est choisie pour que les bulles de gaz 17 soient piégées par capillarité lors du remplissage. Par exemple, pour une cellule de 150 x 100 mm, cette distance est d'environ 3 mm. La surface de la chambre principale 15 est donc délimitée par la périphérie du cadre intérieur 18.

On notera à ce propos que le cadre intérieur 18 peut être réalisé avantageusement en même temps que le cadre de scellement 7 à partir d'un masque ("lay-out") et, en outre, ce cadre intérieur renforce la rigidité de la cellule, ce qui est particulièrement avantageux pour des cellules de grandes dimensions.

On voit également sur les figures 1 et 2 que selon l'invention la chambre secondaire 16 est divisée en une pluralité de compartiments 19, chacun d'eux étant en communication avec la chambre principale par au moins une ouverture de passage 20 pour la circulation du cristal liquide. Ces ouvertures de passage ont une dimension sensiblement supérieure à l'écartement existant entre les lames 5, 6 de la cellule, de sorte que lors du remplissage de celle-ci, l'écoulement dans les différents compartiments 19 s'effectue régulièrement et rapidement. Une ouverture de trop faible dimension entraînerait des perturbations de l'écoulement.

Le compartimentage de la chambre secondaire 16 ainsi que la position des différentes ouvertures de passage 20 sont déterminés en fonction de la géométrie du cadre de scellement 7 pour que lors du remplissage de préférence au moins une bulle 17 se trouve piégée dans chaque compartiment 19.

Dans l'exemple décrit, les ouvertures de passage 20 débouchent dans la partie médiane des compartiments 19 si bien qu'une bulle 17 est piégée dans les parties extrêmes de chaque compartiment et, compte tenu de la forme rectangulaire, une ouverture de passage est ménagée dans chaque coin du cadre intérieur 18. Bien entendu, si les ouvertures de passage 20 sont disposées à l'une des extrémités des compartiments, on comprendra aisément qu'il se formera au remplissage une seule bulle dans ce dernier.

La quantité de gaz et de cristal liquide contenue dans chaque compartiment est déterminée de telle sorte que pour une variation de volume maximum que le cristal liquide peut subir, il reste dans les compartiments une quantité de cristal liquide suffisante pour que les bulles y restent piégées.

Par exemple, pour une cellule de 150 x 100 mm pouvant être soumise à des températures s'étalant dans une gamme de -40°C à +85°C, le rapport entre le volume des bulles et le volume du cristal liquide contenu dans les compartiments peut varier dans une gamme allant de 1/100 à 1/1000, selon la configuration de la cellule.

En outre, on voit sur la figure 2 que le compartiment 21 comprenant l'ouverture de remplissage 11b communique avec la chambre principale 15 par l'intermédiaire de deux ouvertures de passage 20a, 20b disposées de part et d'autre de l'ouverture de remplissage si bien qu'au remplissage, le cristal liquide 8 s'écoule simultanément à partir de deux points séparés. Une telle configuration présente notamment l'avantage de pouvoir créer volontairement une bulle 22 dans le compartiment susdit à la fin du remplissage du cristal liquide. Cette dernière est disposée en regard du joint de colle 12 obturant l'ouverture de remplissage si bien que l'on évite toute pollution éventuelle du cristal liquide par la colle.

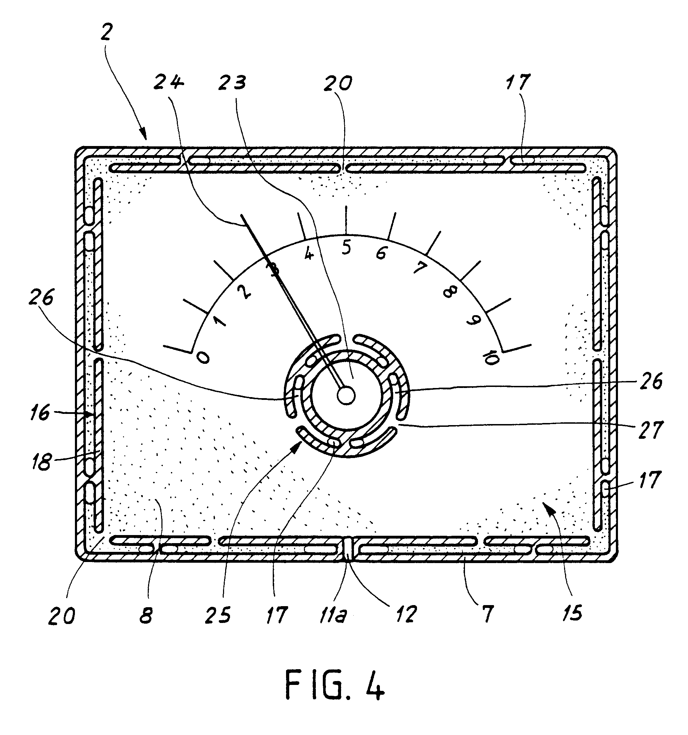

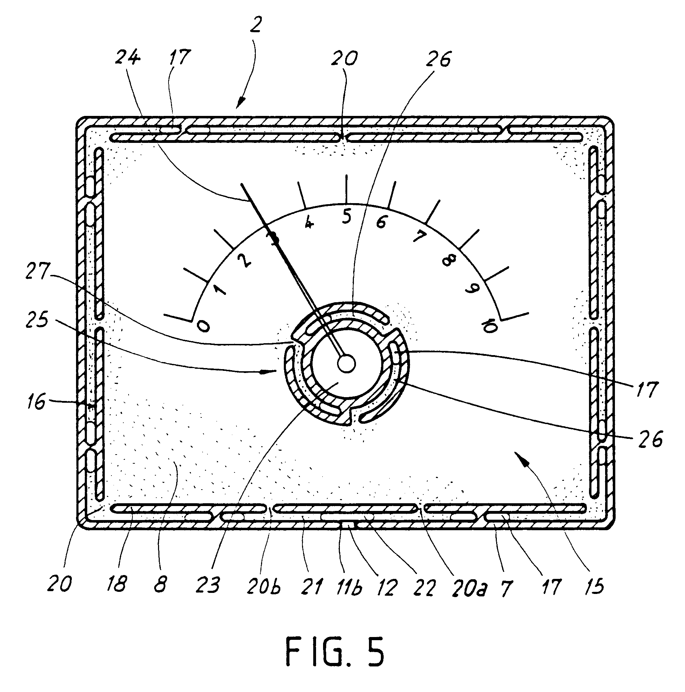

En se référant maintenant aux figures 4 et 5, on voit deux variantes d'un autre mode de réalisation d'une cellule selon l'invention dans lesquelles on a désigné les éléments identiques à ceux décrits précédemment par les mêmes références numériques.

La cellule 2 présentée aux figures 4 et 5 est par exemple une cellule d'affichage matricielle en mode STN destinée à être montée dans un tableau de bord pour véhicule automobile. Elle représente par exemple un compteur de vitesse.

La cellule 2 comprend, ici dans une partie centrale, une zone 23 ne contenant pas de cristal liquide. Dans cette zone est ménagé un trou central pour le passage d'une aiguille 24 pouvant être entraînée par un moteur pas à pas et un rouage placés derrière la cellule, l'aiguille se déplaçant ainsi le long d'une graduation produite par une commande appropriée de la cellule à cristal liquide indiquant par exemple la vitesse. Une telle cellule à cristal liquide est décrite en détail dans la demande de brevet FR 88-02591.

Dans ce mode de réalisation, la cellule comprend une chambre secondaire supplémentaire 25 ménagée le long du pourtour de la zone 23. Cette chambre 25 a une forme annulaire et est divisée en trois compartiments 26, chacun d'eux étant en communication avec la chambre principale par une ouverture de passage 27; chaque compartiment est rempli partiellement par du cristal liquide et par au moins une bulle de gaz. Ces ouvertures de passage 27 peuvent être ménagées dans la partie médiane des compartiments (figure 4) ou dans une partie extrême des compartiments (figure 5).

On voit dans le mode de réalisation de la figure 4 que les ouvertures de communication 20 avec la chambre principale sont disposées au moins dans chaque coin de la cellule et, en outre, que l'ouverture de remplissage 11a débouche directement dans la chambre secondaire. Le cadre de scellement 7 et le cadre intérieur 18 sont reliés à cet endroit. Néanmoins, pour une utilisation dans une même gamme de températures ou de pressions, le rapport du volume des bulles au volume du cristal liquide contenu dans les chambres secondaires est sensiblement égal pour chaque mode de réalisation.

Le comportement au remplissage de la cellule (figure 2) selon l'invention est le suivant :
Le cristal liquide pénètre dans le compartiment situé en regard du trou de remplissage en emprisonnant une bulle de gaz à chaque extrémité de ce dernier puis le cristal liquide pénètre dans la chambre principale par les deux ouvertures de passage ménagées à cet effet. Les deux ouvertures constituent des sources ponctuelles à partir desquelles le cristal s'écoule progressivement dans la chambre principale. L'écoulement du cristal liquide se produit selon deux profils convexes, se rejoignant progressivement pour n'en former plus qu'un seul. Le gaz présent dans la chambre principale est refoulé, et remplit ainsi les différents compartiments de la chambre secondaire avant le cristal liquide par l'intermédiaire des ouvertures de passage si bien que du gaz est emprisonné sous forme de bulles dans chaque compartiment.

Les ouvertures de passage selon l'invention, en particulier celles situées dans chaque coin du cadre intérieur empêchent la formation de bulles de gaz à ces endroits critiques. Ainsi, la chambre principale est complètement remplie par le cristal liquide, et il en résulte une surface active sans défaut.

En outre, une cellule selon l'invention permet d'être utilisée dans une large gamme de températures. En effet, s'il se produit une forte baisse de température, le cristal liquide se rétracte tandis que le volume des chambres principale et secondaire reste sensiblement inchangé. Cependant, la chambre principale communique avec la chambre secondaire par une pluralité d'ouvertures de passage, ce qui permet de compenser la variation de volume du cristal liquide contenu dans la chambre principale par le cristal liquide contenu dans la chambre secondaire, tandis que le volume des bulles contenues dans la chambre secondaire augmente.

La multiplicité des ouvertures de passage diminue la longueur du chemin que le cristal liquide contenu dans la chambre secondaire doit parcourir pour compenser la variation de volume. Il en résulte une compensation sûre et rapide si bien que la formation de bulles dans la chambre principale est rendue impossible.

Lors d'une augmentation de température, il se produit le phénomène inverse, le cristal liquide se dilate, et la variation de volume est alors compensée par la compression des bulles de gaz emprisonnées dans la chambre secondaire.

## Revendications

1. Cellule à cristal liquide comprenant au moins une lame avant ( 5) transparente, une lame arrière (6) et un cadre de scellement (7) interposé entre les deux lames, l'ensemble ainsi formé définissant, un volume étanche dans lequel est emprisonné un film de cristal liquide (8) dont au moins une caractéristique optique est susceptible d'être modifiée quand il est soumis à des phénomènes déterminés, ledit volume étant divisé par au moins une paroi de séparation (18) en une chambre principale (15) définissant une surface active et une chambre secondaire (16) définissant une surface passive s'étendant sur la totalité d'un pourtour de la cellule, ladite chambre secondaire (16) étant partiellement remplie par le cristal liquide (8) et par un gaz (17), la chambre principale (15) communiquant avec la chambre secondaire (16) par une pluralité d'ouvertures (20, 20a, 20b , 27) pratiquées dans la paroi de séparation (18) caractérisée en ce que la chambre secondaire (16) est divisée en une pluralité de compartiments (19, 21, 26), chacun d'eux étant en communication avec la chambre principale (15) par l'intermédiaire d'au moins une desdites ouvertures.

2. Cellule selon la revendication 1, caractérisée en ce que les compartiments (19, 26) ont chacun un volume sensiblement égal.

3. Cellule selon l'une quelconque des revendications 1 ou 2, caractérisée en ce que la chambre secondaire (16) est disposée à la périphérie extérieure de la chambre principale (15) de la cellule (2).

4. Cellule selon l'une quelconque des revendications 1 à 3, caractérisée en ce que la chambre secondaire (16) est définie par le cadre de scellement (8), d'une part, et par ladite paroi de séparation formant un cadre intérieur (18) s'étendant autour de la chambre principale (15), d'autre part.

5. Cellule selon la revendication 4, dans laquelle le cadre intérieur (18) présente une configuration polygonale, caractérisée en ce que les ouvertures de passage (20) sont au moins prévues dans les coins du cadre intérieur (18).

6. Cellule selon l'une quelconque des revendications 1 à 5, caractérisée en ce que les ouvertures (20, 27) débouchent sensiblement dans la partie médiane des compartiments (19, 21, 26).

7. Cellule selon l'une quelconque des revendications précéden tes, caractérisée en ce que les ouvertures de passage (20) sont régulièrement réparties autour de la chambre principale (15).

8. Cellule selon la revendication 7, comprenant une ouverture de remplissage (11a) traversant le cadre de scellement (7), caractérisée en ce que l'ouverture de remplissage (11a) communique directement avec la chambre principale (15).

9. Cellule selon l'une quelconque des revendications 1 à 5, comprenant une ouverture de remplissage (11b) traversant le cadre de scellement (7), caractérisée en ce que l'ouverture de remplissage (11b) communique avec un compartiment (21) comprenant deux ouvertures de passage (20a, 20b) décalées par rapport à l'ouverture de remplissage (11b) et ménagées dans la paroi de séparation (18).

10. Cellule selon l'une quelconque des revendications précédentes comprenant une zone (23) ne contenant pas de cristal liquide, caractérisée en ce qu'elle comprend une chambre secondaire divisée en une pluralité de compartiments (25) ménagée le long du pourtour de la zone susdite.

11. Cellule selon l'une quelconque des revendications précédentes, caractérisée en ce que les lames (5, 6) sont munies sur leurs faces en regard d'une électrode (9, 10) reliée à un dispositif de commande électrique (13).

12. Rétroviseur pour véhicule automobile, caractérisé en ce qu'il comprend une cellule à cristal liquide selon la revendication 11, la lame arrière (6) de cette cellule (2) comportant un revêtement réfléchissant et en ce qu'il comprend au moins un élément (14) susceptible de délivrer un signal représentatif de l'intensité de la lumière l'atteignant, le dispositif de commande (13) agissant sur la transparence de la cellule (2) en réponse audit signal.

13. Dispositif d'affichage matriciel en mode STN, caractérisé en ce qu'il comprend une cellule (2) selon la revendication 11.

## Claims

1. Liquid crystal cell comprising at least one transparent front plate (5), a back plate (6) and a sealing frame (7) interposed between the two plates, the assembly thus formed defining a tight volume in which is contained a liquid crystal film (8) at least one optical characteristic of which is capable of being modified when it is subjected to specific phenomena, said volume being divided by at least one separating wall (18) into a main chamber (15) defining an active surface and a secondary chamber (16) defining an passive surface extending over the full extent of a circumference of the cell, said secondary chamber (16) being partially filled with the liquid crystal (8) and with a gas (17), the main chamber (15) communicating with the secondary chamber (16) by a plurality of openings (20, 20a, 20b, 27) provided in the separating wall (18), characterized in that the secondary chamber (16) is divided into a plurality of compartments (19, 21, 26), each of which is in communication with the main chamber (15) by the intermediary of at least one of said openings.

2. Cell according to claim 1, characterized in that the compartments (19, 26) have each a substantially equal volume.

3. Cell according to any one of claims 1 or 2, characterized in that the secondary chamber (16) is disposed at the outer periphery of the main chamber (15) of the cell (2).

4. Cell according to any one of claims 1 to 3, characterized in that the secondary chamber (16) is defined by the sealing frame (8), on the one hand, and by said separating wall forming an inner frame (18) extending around the main chamber (15), on the other hand.

5. Cell according to claim 4, characterized in that the inner frame (18) presents a polygonal configuration, characterized in that the passage openings (20) are at least provided in the corners of the inner frame (18).

6. Cell according to any one of claims 1 to 5, characterized in that the openings (20, 27) open substantially into the median part of the compartments (19, 21, 26).

7. Cell according to any one of the preceding claims, characterized in that the passage openings (20) are regularly spaced around the main chamber (15).

8. Cell according to claim 7, comprising a filling opening (11a) traversing the sealing frame (7), characterized in that the filling opening (11a) communicates directly with the main chamber (15).

9. Cell according to any one of claims 1 to 5, comprising a filling opening (11b) traversing the sealing frame (7), characterized in that the filling opening (11b) communicates with a compartment (21) comprising two passage openings (20a, 20b) offset in relation to the filling opening (11b) and disposed in the inner frame (18).

10. Cell according to any one of the preceding claims comprising a zone (23) not containing any liquid crystal, characterized in that it comprises a secondary chamber divided into a plurality of compartments (25) disposed along the circumference of the said zone.

11. Cell according to any one of the preceding claims, characterized in that the plates (5, 6) are provided on their opposite faces with an electrode (9, 10) joined to an electrical control device (13).

12. Automobile rear view mirror, characterized in that it comprises a liquid crystal cell according to claim 11, the back plate (6) of this cell (2) comprising a reflective coating and in that it comprises at least one element (14) capable of delivering a signal representing the intensity of the light reaching it, the control device (13) acting on the transparency of the cell (2) in response to said signal.

13. Matrix display device of the STN type, characterized in that it comprises a cell (2) according to claim 11.

## Patentansprüche

1. Flüssigkristallzelle, umfassend mindestens eine transparente frontseitige Lamelle (5), eine rückseitige Lamelle (6) und einen Versiegelungsrahmen (7), der zwischen den beiden Lamellen eingefügt ist, wobei die so gebildete Baugruppe ein abgedichtetes Volumen begrenzt, in welchem ein Flüssigkristallfilm (8) eingefangen ist, bei dem mindestens ein optisches Charakteristikum modifizierbar ist, wenn er bestimmten Phänomenen unterworfen wird, wobei das Volumen durch mindestens eine Irennwandung (18) in eine Hauptkammer (15), welche eine aktive Oberfläche definiert, und eine Sekundärkammer (16), die eine passive Oberfläche definiert, unterteilt wird, welche letztere sich auf der Gesamtheit eines Umfangs der Zelle erstreckt, wobei die Sekundärkammer (16) teilweise von dem Flüssigkristall (8) und von einem Gas (17) gefüllt ist, und wobei die Hauptkammer (15) mit der Sekundärkammer (16) über eine Mehrzahl von Öffnungen (20, 20a, 20b, 27) kommuniziert, die in die Trennwandung (18) eingebracht sind, dadurch gekennzeichnet, daß die Sekundärkammer (16) in eine Mehrzahl von Abteile (19, 21, 26) unterteilt ist, von denen jedes mit der Hauptkammer (15) über mindestens eine der genannten Öffnungen kommuniziert.

2. Zelle nach Anspruch 1, dadurch gekennzeichnet, daß die Abteile (19, 26) jeweils ein im wesentlichen gleiches Volumen aufweisen.

3. Zelle nach einem der Ansprüche 1 oder 2, dadurch gekennzeichnet, daß die Sekundärkammer (16) an der äußeren Peripherie der Hauptkammer (15) der Zelle (2) angeordnet ist.

4. Zelle nach einem der Ansprüche 1 bis 3, dadurch gekennzeichnet, daß die Sekundärkammer (16) auf der einen Seite durch den Versiegelungsrahmen (8) und auf der anderen Rahmen durch die Trennwandung begrenzt ist, die einen Innenrahmen (18) bildet, der sich um die Hauptkammer (15) erstreckt.

5. Zelle nach Anspruch 4, bei der der innere Rahmen (18) eine polygonale Konfiguration aufweist, dadurch gekennzeichnet, daß die Durchtrittsöffnungen (20) mindestens in den Ecken des Innenrahmens (18) vorgesehen sind.

6. Zelle nach einem der Ansprüche 1 bis 5, dadurch gekennzeichnet, daß die Öffnungen (20, 27) im wesentlichen in die mittlere Partie der Abteile (19, 21, 26) münden.

7. Zelle nach einem der vorangehenden Ansprüche, dadurch gekennzeichnet, daß die Durchtrittsöffnungen (20) gleichförmig um die Hauptkammer (15) herum verteilt sind.

8. Zelle nach Anspruch 7 mit einer Auffüllöffnung (11a), die den Versiegelungsrahmen (7) durchsetzt, dadurch gekennzeichnet, daß die Auffüllöffnung (11a) direkt mit der Hauptkammer (15) kommuniziert.

9. Zelle nach einem der Ansprüche 1 bis 5, umfassend eine Auffüllöffnung (11b), die den Verriegelungsrahmen (7) durchsetzt, dadurch gekennzeichnet, daß die Auffüllöffnung (11b) mit einem Abteil (21) kommuniziert, das zwei Durchtrittsöffnungen (20a, 20b) aufweist, die relativ zur Auffüllöffnung (11b) versetzt sind und in die Trennwandung (18) eingearbeitet sind.

10. Zelle nach einem der vorangehenden Ansprüche mit einer kein Flüssigkristall enthaltenden Zone (23), dadurch gekennzeichnet, daß sie eine Sekundärkammer umfaßt, die in eine Mehrzahl von Abteile (25) unterteilt ist, die längs des Umfangs der vorgenannten Zone angeordnet sind.

11. Zelle nach einem der vorangehenden Ansprüche, dadurch gekennzeichnet, daß die Lamellen (5, 6) auf ihren einander zugekehrten Seiten mit einer Elektrode (9, 10) versehen sind, die mit einer elektrischen Steuereinrichtung (13) verbunden ist.

12. Rückspiegel für Kraftfahrzeug, dadurch gekennzeichnet, daß er eine Flüssigkristallzelle nach Anspruch 11 umfaßt, wobei die hintere Lamelle (6) dieser Zelle (2) eine reflektierende Beschichtung aufweist und daß er mindestens ein Element (14) aufweist, das in der Lage ist, ein Signal abzugeben, welches repräsentativ ist für die Intensität des auf es auftreffenden Lichtes, wobei die Steuereinrichtung (13) auf die Transparenz der Zelle 2 im Ansprechen auf das genannte Signal einwirkt.

13. Matrizenanzeigeeinrichtung im STN-Modus, dadurch gekennzeichnet, daß sie eine Zelle (2) nach Anspruch 11 umfaßt.
